# EUROPEAN PATENT SPECIFICATION

(11) **EP 2 539 900 B1**
(45) Date of publication and mention of the grant of the patent: **24.12.2014**
(21) Application number: 11701397.9
(22) Date of filing: 25.01.2011
(51) Int. Cl.: G21C 3/00, G21C 3/58, G21C 3/62

(54) **NUCLEAR FUEL, NUCLEAR FUEL ELEMENT, NUCLEAR FUEL ASSEMBLY AND A METHOD OF MANUFACTURING NUCLEAR FUEL**
KERNBRENNSTOFF, KERNBRENNSTOFFELEMENT, KERNBRENNSTABBÜNDEL UND VERFAHREN ZUR HERSTELLUNG DES KERNBRENNSTOFFES
COMBUSTIBLE NUCLÉAIRE, ÉLÉMENT DE COMBUSTIBLE NUCLÉAIRE, ENSEMBLE DE COMBUSTIBLE NUCLÉAIRE ET PROCÉDÉ DE FABRICATION DE COMBUSTIBLE NUCLÉAIRE

(30) Priority: 22.02.2010 US 709708
(43) Date of publication of application: 02.01.2013
(73) Proprietor: Westinghouse Electric Sweden AB, 721 83 Västeras (SE)
(72) Inventor: HALLSTADIUS, Lars, S-725 92 Västerås (SE); LAHODA, Edward, J., Pittsburgh, Pennsylvania 15218-1352 (US); WALLENIUS, Janne, S-195 47 Märsta (SE); JOLKKONEN, Mikael, S-752 17 Uppsala (SE); POMIRLEANU, Radu, Sewickley, Pennsylvania 15143 (US); RAY, Sumit, Columbia, South Carolina 29212 (US)
(74) Representative: Berglund, Stefan
(86) International application number: PCT/EP2011/050983
(87) International publication number: WO 2011/101208

(56) References cited:
- GB-A- 918 044
- JP-A- 11 202 072
- US-A- 3 213 032
- US-A- 3 708 433
- US-B1- 7 582 232
- US-B2- 8 571 167
- REEVE ET AL: "Ceramics as nuclear reactor fuels", CERAMURGIA INTERNATIONAL,, vol. 1, no. 2, 1 September 1975 (1975-09-01), pages 59-71, XP024165250, ISSN: 0390-5519, DOI: DOI:10.1016/0390-5519(75)90008-3 [retrieved on 1975-09-01]
- T.J. Davies ET AL: "The preparation and examination of mixtures of aluminium nitride (AlN) and uranium mononitride (UN)", Journal of Nuclear Materials, vol. 13, no. 2, 1 January 1964 (1964-01-01), pages 152-168, XP055105085, ISSN: 0022-3115, DOI: 10.1016/0022-3115(64)90037-6

## Description

### BACKGROUND OF THE INVENTION AND PRIOR ART

The present invention refers to a nuclear fuel pellet adapted for use in a water cooled nuclear reactor, including light water reactors LWR, such as Boiling Water Reactors BWR and Pressure Water Reactors PWR, according to the preamble of claims 1 and 2.

The present invention also refers to a fuel element, a fuel assembly and a method of manufacturing a nuclear fuel adapted for use in a water cooled nuclear reactor, including light water reactors LWR, such as Boiling Water Reactors BWR and Pressure Water Reactors PWR.

In water-cooled nuclear reactors, including Light Water Reactors, LWR, and Heavy Water Reactors, HWR, a nuclear fuel including UO₂ is usually used. UO₂ is advantageous due to the fact that it has a high resistance to dissolution in water.

JP-11202072 discloses a nuclear fuel of the kind initially defined. The nuclear fuel is intended for use in a water-cooled reactor. The nuclear fuel comprises particles of oxides or nitrides and is contained in a fuel pellet. The fuel is enclosed in a protecting film or cover of, for instance, aluminium oxide, graphite, silicon carbide or a metal. The purpose of the protecting film is to prevent water from penetrating the fuel pellet and reach uranium nitride.

WO2007/011382 discloses a nuclear fuel of modified UN or modified PuN. The nuclear fuel has an additive of a further nitride, such as at least one of zirconium nitride, thorium nitride, hafnium nitride, titanium nitride, or rare earth nitrides or other actinide nitrides. The nuclear fuel is not adapted for a water-cooled reactor, but for a particular kind of reactor named Small Sealed Transportable Autonomous Reactor, SSTAR, which is a breeder reactor, and thus the nuclear fuel of UN has a very high content of the isotope ²³⁵U.

US-4,059,539 discloses a nuclear fuel consisting of (U,Zr)N where ZrN is dissolved in a matrix of UN. The fuel is adapted for a breeder reactor.

US-7,582,232 refers to a method of manufacturing an actinide nitride nuclear fuel, for instance uranium nitride. The manufacturing starts by providing an actinide oxide, whereafter hydrogen fluoride with enriched 15N is added. In claim 3 it is proposed to add zirconium oxide to the initial actinide oxide at an early stage of the production, i.e. before the fuel is converted to an actinide nitride. The zirconium oxide seems to be converted to zirconium mononitride during the manufacturing process.

GB-918,044 discloses various compositions of oxide nuclear fuels containing U or Th together with a metallic constituent.

US-3,213,032 discloses a process for sintering uranium nitride to high densities, and suggest to add sintering aids to allow sintered densities approaching the theoretical density of UN.

### SUMMARY OF THE INVENTION

It is thus known to use a nuclear fuel based on uranium nitride in breeder reactors, which are not water-cooled. UN has technical and economical advantages in relation to UO₂. The object of the present invention is therefore to provide a nuclear fuel adapted for water-cooled reactors and based on UN.

This object is achieved by the nuclear fuel initially defined, which is characterised by the characterizing features of claims 1 and 2.

Pure UN contains approximately 40% more uranium atoms than UO₂. A nuclear fuel based on UN will therefore result in a significant improvement of the operating costs, and thus the costs of generating electricity. Furthermore, UN has a higher thermal conductivity, which, in addition and in contrast to UO₂, increases with the temperature. The thermal conductivity is approximately 3 - 8 higher for UN than for UO₂ depending on the temperature. Consequently, a nuclear fuel based on UN will not be heated to the same extent as UO₂ during operation of the nuclear reactor, which is advantageous for several reasons, for instance less thermal expansion, less release of fission gases and less stored energy, the latter advantage being important in case of a LOCA, Loss Of Coolant Accident.

UN is disadvantageous in comparison with UO₂ since UN is more reactive with water than UO₂. This is a potential limitation for use in water-cooled reactors, e.g., an LWR, where a leak in the fuel cladding cannot be excluded. While UO₂ reacts slowly with water at LWR conditions (250°C to 350°C), the reaction rate of UN is such that the gases produced expand and rupture the cladding. Consequently, it has up to now not been possible to use UN in water cooled reactors, where there is a risk for water penetrating the fuel cladding and contacting the nuclear fuel, see the article *XPS and XRD studies of corrosion of uranium nitride by water* of S. Sunder and N. H. Miller in Journal of Alloys and Compounds, pages 271-273 (1998). The writers conclude that UN can not be used in water cooled reactors.

By introducing an additive according to the present invention, the reaction rate of UN with water can be reduced to an acceptable level. UN with the defined additive or additives will be stable also in an environment containing water. The additives to be added to the uranium-containing compound will react with water to form a tight, water insoluble, protective layer over the UN content on all surfaces, including crack surfaces.

The defined additives meet the following important criteria. They do not react with the commonly used cladding made of a zirconium-based alloy, such as Zircaloy-2 and Zircaloy-4. They all have a relatively low neutron absorption cross-section. The preferred and here exemplified additives all have a neutron cross-section in the same range as Zr. Moreover, the additives are all stable in radioactive environments. The additives can be added in elementary form or as a compound, such as an oxide, a nitride, a hydride etc. They may also be present in the finished nuclear fuel in elementary form or as a compound, for instance an oxide, a nitride, a hydride etc., such as ZrH₂, Si₃N₄, Al₂O₃, Mo_{y}Oₓ, SiO₂, ZrH₃. The additives will be accumulated at the grain boundaries, and they prevent penetration of water to the UN on all exposed surfaces, including crack surfaces.

The additives defined have very low corrosion rates in water. Zr in the form of ZrN has been shown in previous work to be effective in protecting PuN fuels from water at the 70 atom % level. Additives of Mo metal to U metal have been shown to eliminate U metal corrosion at the 5 to 19 volume % level. Therefore, it is believed that the addition of nitride, oxide, or hydride compounds of Zr, Al, Mo, Si and U to UN should protect the majority of the UN in the fuel matrix. With regard to an additive comprising U or an uranium compound to protect UN, it is to be noted that, for instance, if U metal is added to UN, then upon exposure to water, the U metal will oxidize to UO₂ which will protect the underlying UN.

According to an embodiment of the invention, the nitrogen content of the uranium-containing compound comprises at least 60% by weight of the isotope ¹⁵N, preferably at least 80% by weight of the isotope ¹⁵N, and most preferably at least 90% by weight of the isotope ¹⁵N. Nitrogen is naturally present as 99,634% ¹⁴N (stable with 7 neutrons) and 0,366% ¹⁵N (stable with 8 neutrons). ¹⁴N has a high absorption cross-section. By enriching natural nitrogen in ¹⁵N, parasitic absorption of neutrons by ¹⁴N can be prevented or minimised.

According to the invention, the additive includes at least one of ZrH₂, Si₃N₄, Al₂O₃, Mo_{y}Oₓ, SiO₂, ZrH₃, the element Mo, and the element Si, wherein the amount of the additive is equal to or less than 30% by volume of the nuclear fuel. Consequently, in order to maintain high volumetric uranium densities, the amount of non-uranium containing additives should be less than 30% by volume. At this level, the overall uranium density will be higher than for UO₂, i.e. good uranium volumetric densities will be maintained in the nuclear fuel.

According to the invention, the additive includes at least one of, U₃Si₂, ZrUAI, ZrUSi, ZrUH, U₃Si, U-5Nb-5Zr, U-3Nb-1.5Zr, U-9Mo, U-6Mo, U-1.5Mo-1.0Zr, U-10Zr, and U₃SiAl, and the element U, wherein the amount of the additive is equal to or less than 80% by volume of the nuclear fuel. Consequently, in order to maintain high volumetric uranium densities, the amount of uranium containing additives could be up to approximately 80% by volume. At this level, the overall uranium density will be higher than for UO₂, i.e. good uranium volumetric densities will be maintained in the nuclear fuel.

According to an embodiment of the invention, the nuclear fuel is provided in the form of a nuclear fuel pellet. Advantageously, the nuclear fuel pellet may be formed through sintering of a powder of the uranium-containing compound and said at least one additive.

The object is also achieved by the fuel element defined in claim 6, and by the fuel assembly defined in claim 8.

Furthermore, the object is achieved by the method defined in claims 9 and 10.

According to an embodiment, the sintering temperature may be at least 1800°C, at least 2000 °C, preferably at least 2100 °C, most preferably at least 2200 °C.

### BRIEF DESCRIPTION OF THE DRAWINGS

The present invention is now to be explained more closely by means of a description of various embodiments and examples, and with reference to the drawing attached hereto.
- Fig. 1: discloses schematically a side view partly in section of a fuel assembly for a BWR.
- Fig. 2: discloses schematically a side view of a fuel assembly for a PWR.
- Fig. 3: discloses longitudinal sectional view of a fuel element of the fuel assembly in Fig 1 or 2.

### DETAILED DESCRIPTION OF VARIOUS EMBODIMENTS AND EXAMPLES OF THE INVENTION

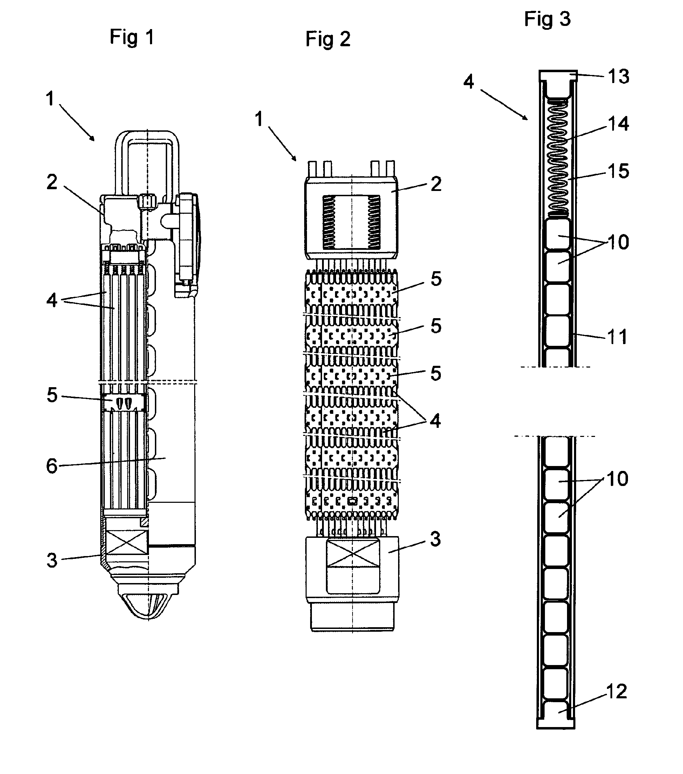

Fig. 1 shows a fuel assembly 1 for use in water cooled light water reactors, LWR, and more precisely a Boiling Water Reactor, BWR. The fuel assembly 1 comprises known parts including bottom member 2, a top member 3 and a plurality of fuel elements in the form of elongated fuel rods 4 extending between the bottom member 2 and the top member 3. The fuel rods 4 are maintained in their positions by means of a plurality of spacers 5, one of which is shown in Fig. 1. Furthermore, the fuel assembly comprises a flow channel 6, or fuel box, surrounding and enclosing the fuel rods 4.

Fig. 2 shows a fuel assembly 1 for use in water cooled light water reactors, LWR, and more precisely a Pressure Water Reactor, PWR. The fuel assembly 1 comprises known parts including bottom member 2, a top member 3 and a plurality of fuel elements in the form of elongated fuel rods 4 extending between the bottom member 2 and the top member 3. The fuel rods 4 are maintained in their positions by means of a plurality of spacers 5.

Fig. 3 shows a single fuel element designed as a fuel rod 4 of the kind used in the fuel assemblies 1 of Figs 1 and 2. The fuel rod 4 comprises a nuclear fuel in the form of a plurality of fuel pellets 10 and a cladding in the from of a cladding tube 11, a bottom plug 12 and a top plug 13. The fuel pellets 10 are arranged in a pile provided in the cladding tube 11. The cladding tube 11 thus encloses the fuel pellets 10 and a gas. A spring 14 is arranged in an upper plenum 15 and presses the fuel pellets towards the bottom plug 12.

The nuclear fuel of the fuel elements described above comprises an uranium-containing compound consisting of UN. The uranium content of the uranium-containing compound comprises at least the isotopes ²³⁸U and ²³⁵U. The uranium content is enriched with respect to ²³⁵U in relation to the natural composition of uranium, but the uranium content is less than 10, 9, 8, 7, 6 or 5% by weight of the isotope ²³⁵U.

The nuclear fuel comprises, in addition to uranium and nitrogen, an additive. The purpose of the additive is primarily to reduce the reaction rate of UN with water. The additive consists of, or substantially consists of, at least one element, in elementary form or as a compound, selected from the group consisting of Zr, Mo, Si, Al, Nb and U. The element(s) or compound(s) forming the additive is homogeneously distributed in the fuel element.

Natural nitrogen is composed of 99,634% ¹⁴N (stable with 7 neutrons) and 0,366% ¹⁵N (stable with 8 neutrons). ¹⁵N has a significantly lower neutron absorption cross section than ¹⁴N, which has a relatively high absorption cross-section. In order to minimise or reduce parasitic absorption of neutrons, the nitrogen content of the uranium-containing compound is therefore enriched with respect to ¹⁵N. The nitrogen content of the uranium-containing compound may thus comprise at least 60, at least 70, at least 80, at least 90, at least 95 or at least 98% by weight of the isotope ¹⁵N.

The additive may thus comprise or consist of one or several of the above mentioned elements in elementary form or as a compound. The compounds may for instance be oxides, nitrides, hydrides etc. Examples of suitable additives includes at least one of ZrH₂, Si₃N₄, Al₂O₃, Mo_{y}Oₓ, SiO₂, ZrH₃, the element Mo, the element Si, U₃Si₂, ZrUAl, ZrUSi, ZrUH, U₃Si, U-5Nb-5Zr, U-3Nb-1.5Zr, U-9Mo, U-6Mo, U-1.5Mo-1.0Zr, U-10Zr, and U₃SiAl, and the element U.

It is to be noted that the additive may comprise or consist of a single one of any of these elements or compounds. The additive may also comprise or consist of any combination of two or more of any of these elements or compounds.

A first group of these additives include at least one of the elements Mo and Si, and/or at least one of the compounds ZrH₂, Si₃N₄, Al₂O₃, Mo_{y}Oₓ, and ZrH₃.

In this first group the elements or compounds do not contain uranium or any other fissionable element, which limits the amount of the additive for maintaining a high volumetric uranium density in the nuclear fuel. Consequently, the amount of the additive for the first group should be equal to or less than 30% by volume of the nuclear fuel. Advantageously, the amount of the additive for this group may be equal to or less than 25, 20, 15, or 10 % by volume of the nuclear fuel. The amount of the additive for this group is equal to or more than 2, 5, 7 or 10 % by volume of the nuclear fuel. The additives of the first group will react with water to form a tight, water insoluble, protective layer over the UN content.

The amount of the additive, or more precisely the percentage by weight of the additive, may be smaller for the additive in elementary form than for the additive in the form of a compound.

A second group of the additives include the element U and/or at least one of the compounds U₃Si₂, ZrUAI, ZrUSi, ZrUH, U₃Si, U-5Nb-5Zr, U-3Nb-1.5Zr, U-9Mo, U-6Mo, U-1.5Mo-1.0Zr, U-10Zr, and U₃SiAl.

The additives of this second group includes uranium, which means that the amount of the additive may be higher than for the first group for maintaining a high volumetric uranium density in the nuclear fuel. Consequently, the amount of the additive for the second group should be equal to or less than 80% by volume of the nuclear fuel. Advantageously, the amount of the additive for the second group may be equal to or less than 70, 60, 50, 40, 30, 20 or 10% by volume of the nuclear fuel. The amount of the additive for this group is equal to or more than 2, 5, 7 or 10% by volume of the nuclear fuel. The uranium-containing compounds of the second group will react with water to form a tight, water insoluble, protective layer over the UN content. An additive comprising the element U will, upon exposure to water, oxidize to UO₂, which will protect the underlying UN.

As mentioned above the nuclear fuel may be realised as a sintered solid body, such as said nuclear fuel pellet 10. The fuel pellet 10 may have a cylindrical shape, preferably a circular cylindrical shape, and may be annular.

The nuclear fuel may be manufactured through a suitable method comprising the following steps of:
Uranium, for instance in the form of a powder, enriched with respect to ²³⁵U is provided.

Nitrogen, for instance in the form of a powder, enriched with respect to ¹⁵N is provided.

Uranium and nitrogen are mixed to form a homogenous uranium-containing compound consisting of UN. The reaction may consist of, but is not limited to, direct nitridation of metallic uranium, or carbo-thermic nitridation of uranium oxide.

An additive, as defined above, in the form of a powder, is added to the uranium-containing compound.

The uranium-containing compound and the additive are mixed to form a homogeneous mixture, for instance in the from of a powder. As an alternative embodiment, the additive may be introduced in such a way that it covers and protects individual uranium-containing powder grains.

The mixture may also be sintered by means of a suitable sintering process at sintering pressure and a sintering temperature to a sintered solid body, for instance a cylindrical nuclear fuel pellet. The sintering temperature is at least 1800°C, at least 2000 °C, preferably at least 2100 °C, most preferably at least 2200 °C.

The invention is not limited to the embodiments and examples describe above, but may be varied and modified within the scope of the following claims.

## Claims

1. A nuclear fuel in the form of a nuclear fuel pellet (10) adapted for use in a water cooled nuclear reactor, including light water reactors LWR, such as Boiling Water Reactors BWR and Pressure Water Reactors PWR,
the nuclear fuel comprising
- an uranium-containing compound consisting of UN, wherein the uranium content of the uranium-containing compound comprises less than 10% by weight of the isotope ²³⁵U, and
- an additive consisting of, or substantially consisting of at least one of ZrH₂, Si₃N₄, Al₂O₃, Mo_{y}Oₓ, SiO₂, ZrH₃, Mo in elementary form and Si in elementary form, wherein the amount of the additive is equal to or less than 30% by volume of the nuclear fuel,
**characterized in that** the nuclear fuel pellet (10) is formed through sintering of a powder of the uranium-containing compound and a powder of the additive, and **in that** the additive is homogeneously distributed in the fuel.

2. A nuclear fuel in the form of a nuclear fuel pellet (10) adapted for use in a water cooled nuclear reactor, including light water reactors LWR, such as Boiling Water Reactors BWR and Pressure Water Reactors PWR,
the nuclear fuel comprising
- an uranium-containing compound consisting of UN, wherein the uranium content of the uranium-containing compound comprises less than 10% by weight of the isotope ²³⁵U, and
- an additive, **characterized in that** the additive consists of, or substantially consists of at least one of U₃Si₂, ZrUAl, ZrUSi, ZrUH, U₃Si, U-5Nb-5Zr, U-3Nb-1.5Zr, U-9Mo, U-6Mo, U-1.5Mo-1.0Zr, U-10Zr, U₃SiAl, and U in elementary form, wherein the amount of the additive is equal to or less than 80% by volume of the nuclear fuel,
wherein the nuclear fuel pellet (10) is formed through sintering of a powder of the uranium-containing compound and a powder of the additive, and **in that** the additive is homogeneously distributed in the fuel.

3. A nuclear fuel according to any one of claims 1 and 2, wherein the nitrogen content of the uranium-containing compound comprises at least 60% by weight of the isotope ¹⁵N.

4. A nuclear fuel according to any one of claims 1 and 2, wherein the nitrogen content of the uranium-containing compound comprises at least 70% by weight of the isotope ¹⁵N.

5. A nuclear fuel according to any one of claims 1 and 2, wherein the nitrogen content of the uranium-containing compound comprises at least 80% by weight of the isotope ¹⁵N.

6. A fuel element comprising a cladding and a nuclear fuel according to any one of claims 1 to 5.

7. A fuel element according to claim 6, wherein the fuel element is designed as an elongated fuel rod (4).

8. A fuel assembly (1) comprising a plurality of fuel elements according to any one of claims 6 and 7.

9. A method of manufacturing a nuclear fuel in the form of a nuclear fuel pellet (10) adapted for use in a water cooled nuclear reactor, including light water reactors LWR, such as Boiling Water Reactors BWR and Pressure Water Reactors PWR, the method comprising the step of:
providing a powder of an uranium-containing compound consisting of UN, wherein the uranium content of the uranium-containing compound comprises less than 10% by weight of the isotope ²³⁵U,
adding to the uranium-containing compound a powder of an additive consisting of, or substantially consisting of at least one of ZrH₂, Si₃N₄, Al₂O₃, Mo_{y}Oₓ, SiO₂, ZrH₃, Mo in elementary form and Si in elementary form, wherein the amount of the additive is equal to or less than 30% by volume of the nuclear fuel,
mixing the uranium-containing compound and the additive to a powder mixture, and
sintering the mixture at sintering pressure and a sintering temperature to a nuclear fuel pellet.

10. A method of manufacturing a nuclear fuel in the form of a nuclear fuel pellet (10) adapted for use in a water cooled nuclear reactor, including light water reactors LWR, such as Boiling Water Reactors BWR and Pressure Water Reactors PWR, the method comprising the step of:
providing a powder of an uranium-containing compound consisting of UN, wherein the uranium content of the uranium-containing compound comprises less than 10% by weight of the isotope ²³⁵U,
adding to the uranium-containing compound a powder of an additive consisting of, or substantially consisting of at least one of U₃Si₂, ZrUAl, ZrUSi, ZrUH, U₃Si, U-5Nb-5Zr, U-3Nb-1.5Zr, U-9Mo, U-6Mo, U-1.5Mo-1.0Zr, U-10Zr, U₃SiAl, and U in elementary form, wherein the amount of the additive is equal to or less than 80% by volume of the nuclear fuel,
mixing the uranium-containing compound and the additive to a powder mixture, and
sintering the mixture at sintering pressure and a sintering temperature to a nuclear fuel pellet.

11. A method according to any one of claims 9 and 10, wherein the sintering temperature is at least 1800°C, at least 2000 °C, preferably at least 2100 °C, most preferably at least 2200 °C.

## Patentansprüche

1. Kernbrennstoff in Form einer Kernbrennstofftablette (10), geeignet zur Verwendung in einem wassergekühlten Kernreaktor einschließlich Leichtwasserreaktoren LWR wie z.B.
Siedewasserreaktoren SWR und Druckwasserreaktoren DWR,
wobei der Kernbrennstoff Folgendes umfasst:
- eine uranhaltige Verbindung, die aus UN besteht, wobei der Urangehalt der uranhaltigen Verbindung weniger als 10 Gew.-% des Isotops ²³⁵U umfasst, und
- einen Zusatz, der aus wenigstens einem aus ZrH₂, Si₃N₄, Al₂O₃, Mo_{y}Oₓ, SiO₂, ZrH₃, Mo in elementarer Form und Si in elementarer Form besteht oder im Wesentlichen daraus besteht, wobei die Menge des Zusatzes gleich oder weniger als 30 Vol.-% des Kernbrennstoffs beträgt,
**dadurch gekennzeichnet, dass** die Kernbrennstofftablette (10) durch Sintern eines Pulvers der uranhaltigen Verbindung und eines Pulvers des Zusatzes gebildet wird, und dass der Zusatz in dem Brennstoff homogen verteilt ist.

2. Kernbrennstoff in Form einer Kernbrennstofftablette (10), geeignet zur Verwendung in einem wassergekühlten Kernreaktor einschließlich Leichtwasserreaktoren LWR wie z.B.
Siedewasserreaktoren SWR und Druckwasserreaktoren DWR,
wobei der Kernbrennstoff Folgendes umfasst:
- eine uranhaltige Verbindung, die aus UN besteht, wobei der Urangehalt der uranhaltigen Verbindung weniger als 10 Gew.-% des Isotops ²³⁵U umfasst, und
- einen Zusatz, **dadurch gekennzeichnet, dass** der Zusatz aus wenigstens einem aus U₃Si₂, ZrUAl, ZrUSi, ZrUH, U₃Si, U-5Nb-5Zr, U-3Nb-1.5Zr, U-9Mo, U-6Mo, U-1.5Mo-1.0Zr, U-10Zr, U₃SiAl und U in elementarer Form besteht oder im Wesentlichen daraus besteht, wobei die Menge des Zusatzes gleich oder weniger als 80 Vol.-% des Kernbrennstoffs beträgt,
wobei die Kernbrennstofftablette (10) durch Sintern eines Pulvers der uranhaltigen Verbindung und eines Pulvers des Zusatzes gebildet wird, und dass der Zusatz in dem Brennstoff homogen verteilt ist.

3. Kernbrennstoff nach einem der Ansprüche 1 und 2, wobei der Stickstoffgehalt der uranhaltigen Verbindung wenigstens 60 Gew.-% des Isotops ¹⁵N umfasst.

4. Kernbrennstoff nach einem der Ansprüche 1 und 2, wobei der Stickstoffgehalt der uranhaltigen Verbindung wenigstens 70 Gew.-% des Isotops ¹⁵N umfasst.

5. Kernbrennstoff nach einem der Ansprüche 1 und 2, wobei der Stickstoffgehalt der uranhaltigen Verbindung wenigstens 80 Gew.-% des Isotops ¹⁵N umfasst.

6. Brennstoffelement, umfassend eine Brennstoffhülle und einen Kernbrennstoff nach einem der Ansprüche 1 bis 5.

7. Brennstoffelement nach Anspruch 6, wobei das Brennstoffelement als langgestreckter Brennstab (4) ausgebildet ist.

8. Brennstoffanordnung (1), umfassend eine Vielzahl von Brennstoffelementen nach einem der Ansprüche 6 und 7.

9. Verfahren zur Herstellung eines Kernbrennstoffs in Form einer Kernbrennstofftablette (10), geeignet zur Verwendung in einem wassergekühlten Kernreaktor einschließlich Leichtwasserreaktoren LWR wie z.B. Siedewasserreaktoren SWR und Druckwasserreaktoren DWR, wobei das Verfahren die folgenden Schritte umfasst:
Bereitstellen eines Pulvers einer uranhaltigen Verbindung, die aus UN besteht, wobei der Urangehalt der uranhaltigen Verbindung weniger als 10 Gew.-% des Isotops ²³⁵U umfasst,
Zusetzen eines Pulvers eines Zusatzes, der aus wenigstens einem aus ZrH₂, Si₃N₄, Al₂O₃, Mo_{y}Oₓ, SiO₂, ZrH₃, Mo in elementarer Form und Si in elementarer Form besteht oder im Wesentlichen daraus besteht, zu der uranhaltigen Verbindung,
wobei die Menge des Zusatzes gleich oder weniger als 30 Vol.-% des Kernbrennstoffs beträgt,
Mischen der uranhaltigen Verbindung und des Zusatzes zu einem Pulvergemisch, und
Sintern des Gemisches bei einem Sinterdruck und einer Sintertemperatur zu einer Kernbrennstofftablette.

10. Verfahren zur Herstellung eines Kernbrennstoffs in Form einer Kernbrennstofftablette (10), geeignet zur Verwendung in einem wassergekühlten Kernreaktor einschließlich Leichtwasserreaktoren LWR wie z.B. Siedewasserreaktoren SWR und Druckwasserreaktoren DWR, wobei das Verfahren die folgenden Schritte umfasst:
Bereitstellen eines Pulvers einer uranhaltigen Verbindung, die aus UN besteht, wobei der Urangehalt der uranhaltigen Verbindung weniger als 10 Gew.-% des Isotops ²³⁵U umfasst,
Zusetzen eines Pulvers eines Zusatzes, der aus wenigstens einem aus U₃Si₂, ZrUAl, ZrUSi, ZrUH, U₃Si, U-5Nb-5Zr, U-3Nb-1.5Zr, U-9Mo, U-6Mo, U-1.5Mo-1.0Zr, U-10Zr, U₃SiAl, und U in elementarer Form besteht oder im Wesentlichen daraus besteht,
zu der uranhaltigen Verbindung, wobei die Menge des Zusatzes gleich oder weniger als 80 Vol.-% des Kernbrennstoffs beträgt,
Mischen der uranhaltigen Verbindung und des Zusatzes zu einem Pulvergemisch, und
Sintern des Gemisches bei einem Sinterdruck und einer Sintertemperatur zu einer Kernbrennstofftablette.

11. Verfahren nach einem der Ansprüche 9 und 10, wobei die Sintertemperatur wenigstens 1800°C, wenigstens 2000°C, vorzugsweise wenigstens 2100°C, insbesondere wenigstens 2200°C beträgt.

## Revendications

1. Combustible nucléaire sous la forme d'une pastille de combustible nucléaire (10) pouvant être utilisée dans un réacteur nucléaire à refroidissement par eau, notamment les réacteurs à eau légère LWR, tels que les réacteurs à eau bouillante BWR et les réacteurs à eau pressurisée PWR,
le combustible nucléaire comprenant
- un composé contenant de l'uranium constitué d'UN, dans lequel la teneur en uranium du composé contenant de l'uranium comprend moins de 10 % en poids de l'isotope ²³⁵U, et
- un additif constitué de ou essentiellement constitué d'au moins un composé choisi parmi ZrH₂, Si₃N₄, Al₂O₃, Mo_{y}O_{z}, SiO₂ ZrH₃, Mo sous forme élémentaire et Si sous forme élémentaire, dans lequel
la quantité de l'additif est inférieure ou égale à 30 % en volume du combustible nucléaire,
**caractérisé en ce que** la pastille de combustible nucléaire (10) est formée par le frittage d'une poudre du composé contenant de l'uranium et d'une poudre de l'additif, et **en ce que** l'additif est réparti de manière homogène dans le combustible.

2. Combustible nucléaire sous la forme d'une pastille de combustible nucléaire (10) pouvant être utilisée dans un réacteur nucléaire à refroidissement par eau, notamment les réacteurs à eau légère LWR, tels que les réacteurs à eau bouillante BWR et les réacteurs à eau pressurisée PWR,
le combustible nucléaire comprenant
- un composé contenant de l'uranium constitué d'UN, dans lequel la teneur en uranium du composé contenant de l'uranium comprend moins de 10 % en poids de l'isotope ²³⁵U, et
- un additif, **caractérisé en ce que** l'additif est constitué de ou essentiellement constitué d'au moins un composé choisi parmi U₃Si₂, ZrUAl, ZrUSi, ZrUH, U₃Si, U-5Nb-5Zr, U-3Nb-1,5Zr, U-9Mo, U-6Mo, U-1,5Mo-1,0Zr, U-10Zr, U₃SiAl et U sous forme élémentaire, dans lequel
la quantité de l'additif est inférieure ou égale à 80 % en volume du combustible nucléaire,
dans lequel la pastille de combustible nucléaire (10) est formée par le frittage d'une poudre du composé contenant de l'uranium et d'une poudre de l'additif, et **en ce que** l'additif est réparti de manière homogène dans le combustible.

3. Combustible nucléaire selon l'une quelconque des revendications 1 et 2, dans lequel la teneur en azote du composé contenant de l'uranium comprend au moins 60 % en poids de l'isotope ¹⁵N.

4. Combustible nucléaire selon l'une quelconque des revendications 1 et 2, dans lequel la teneur en azote du composé contenant de l'uranium comprend au moins 70 % en poids de l'isotope ¹⁵N.

5. Combustible nucléaire selon l'une quelconque des revendications 1 et 2, dans lequel la teneur en azote du composé contenant de l'uranium comprend au moins 80 % en poids de l'isotope ¹⁵N.

6. Elément de combustible, comprenant une gaine et un combustible nucléaire selon l'une quelconque des revendications 1 à 5.

7. Elément de combustible selon la revendication 6, dans lequel l'élément de combustible est conçu sous la forme d'une barre de combustible allongée (4).

8. Ensemble combustible (1), comprenant une pluralité d'éléments de combustible selon l'une quelconque des revendications 6 et 7.

9. Procédé de fabrication d'un combustible nucléaire sous la forme d'une pastille de combustible nucléaire (10) pouvant être utilisée dans un réacteur nucléaire à refroidissement par eau, notamment les réacteurs à eau légère LWR, tels que les réacteurs à eau bouillante BWR et les réacteurs à eau pressurisée PWR, le procédé comprenant les étapes suivantes :
l'obtention d'une poudre d'un composé contenant de l'uranium constitué d'UN, dans lequel la teneur en uranium du composé contenant de l'uranium comprend moins de 10 % en poids de l'isotope ²³⁵U,
l'ajout au composé contenant de l'uranium d'une poudre d'un additif constitué de ou essentiellement constitué d'au moins un composé choisi parmi ZrH₂, Si₃N₄, Al₂O₃, Mo_{y}O_{z}, SiO₂, ZrH₃, Mo sous forme élémentaire et Si sous forme élémentaire, dans lequel la quantité de l'additif est inférieure ou égale à 30 % en volume du combustible nucléaire,
le mélange du composé contenant de l'uranium et de l'additif pour obtenir un mélange pulvérulent, et
le frittage du mélange sous une pression de frittage et à une température de frittage pour obtenir une pastille de combustible nucléaire.

10. Procédé de fabrication d'un combustible nucléaire sous la forme d'une pastille de combustible nucléaire (10) pouvant être utilisée dans un réacteur nucléaire à refroidissement par eau, notamment les réacteurs à eau légère LWR, tels que les réacteurs à eau bouillante BWR et les réacteurs à eau pressurisée PWR, le procédé comprenant les étapes suivantes :
l'obtention d'une poudre d'un composé contenant de l'uranium constitué d'UN, dans lequel la teneur en uranium du composé contenant de l'uranium comprend moins de 10 % en poids de l'isotope ²³⁵U,
l'ajout au composé contenant de l'uranium d'une poudre d'un additif constitué de ou essentiellement constitué d'au moins un composé choisi parmi U₃Si₂, ZrUAl, ZrUSi, ZrUH, U₃Si, U-5Nb-5Zr, U-3Nb-1,5Zr, U-9Mo, U-6Mo, U-1,5Mo-1,0Zr, U-10Zr, U₃SiAl et U sous forme élémentaire, dans lequel la quantité de l'additif est inférieure ou égale à 80 % en volume du combustible nucléaire,
le mélange du composé contenant de l'uranium et de l'additif pour obtenir un mélange pulvérulent, et
le frittage du mélange sous une pression de frittage et à une température de frittage pour obtenir une pastille de combustible nucléaire.

11. Procédé selon l'une quelconque des revendications 9 et 10, dans lequel la température de frittage est d'au moins de 1800 °C, d'au moins de 2000 °C, de préférence d'au moins de 2100 °C, et de manière davantage préférée encore, d'au moins de 2200 °C.
